# EUROPÄISCHE PATENTSCHRIFT

(11) **EP 1 366 126 B1**
(45) Veröffentlichungstag und Bekanntmachung des Hinweises auf die Patenterteilung: **30.05.2007**
(21) Anmeldenummer: 02711820.7
(22) Anmeldetag: 29.01.2002
(51) Int. Cl.: C09D 11/16

(54) **MARKIERUNGSFLÜSSIGKEIT**
MARKING LIQUID
LIQUIDE DE MARQUAGE

(30) Priorität: 30.01.2001 DE 10103982; 20.07.2001 DE 10135530; 19.09.2001 DE 10146187; 19.09.2001 DE 10146188
(43) Veröffentlichungstag der Anmeldung: 03.12.2003
(73) Patentinhaber: Schwan-STABILO Schwanhäusser GmbH & Co. KG, 90562 Heroldsberg (DE)
(72) Erfinder:
(74) Vertreter: Leissler-Gerstl, Gabriele
(86) Internationale Anmeldenummer: PCT/EP2002/000910
(87) Internationale Veröffentlichungsnummer: WO 2002/061003

(56) Entgegenhaltungen:
- US-A- 3 779 780
- US-A- 4 664 711
- US-A- 5 294 664

## Beschreibung

Die Erfindung betrifft eine Markierungsflüssigkeit und deren Verwendung.

Markierungsflüssigkeiten werden dazu verwendet, Texte bzw. Textstellen durch ihre leuchtende Farbe hervorzuheben. Die Markierungsflüssigkeit wird dabei üblicherweise von einem Auftrags- oder Schreibgerät mit entsprechend ausgebildeter Spitze abgegeben. Üblicherweise enthalten Markierungsflüssigkeiten Tagesleuchtfarben oder fluoreszierende Farbstoffe bzw. Färbemittel, die die Leuchtwirkung auf der Oberfläche einer Schreibunterlage, z.B. eines Papiers erzeugen. Die Markierungsflüssigkeit soll dabei beim Überstreichen des geschriebenen Textes diesen zwar hervorheben, aber nicht verändern, insbesondere weder verwischen, noch verfärben.

Es ergeben sich nun Probleme, wenn Markierungsflüssigkeiten auf Wasserbasis verwendet werden, um von einem Tintenstrahldrucker ausgedruckte Texte zu markieren.

Tintenstrahldrucker sind weitverbreitet - ebenso wie das Markieren von Texten und Textstellen mit fluoreszierenden Tinten mit Textmarkern und Highlightern. Die Tinten, die für den Tintenstrahldruck verwendet werden, basieren meist auf wässrigen Flüssigkeiten und sind entweder Lösungen wasserlöslicher Farbstoffe oder wässrige Dispersionen von Pigmenten oder eingefärbten Polymerteilchen, die auch als pigmentierte Tinten bezeichnet werden. Die pigmentierten Tinten setzen sich immer mehr durch, weil sie eine bessere Lichtechtheit besitzen, als die meist unter Verwendung von wasserlöslichen Farbstoffen hergestellten, und zudem feinere Drucke mit höherer Auflösung erlauben. Farbstoffbasierte Tinten dringen zwar tiefer in das verwendete Papier ein und färben die Fasern intensiver an und haften dadurch auch besser, sie haben aber den Nachteil einer geringeren Lichtechtheit und können außerdem mit sogenannten Tintenkillern, meist Lösungen von Reduktionsmittel und/oder Säuren, farblich verändert oder gelöscht werden.

In der pigmentierten Tintenstrahldrucktinte sind die für den Druck verwendeten Pigmente mit Stabilisatoren dispergiert, die beim Drucken nach dem Trocknen als Film auf dem Papier zurückbleiben. Wenn nun eine wässrige Flüssigkeit mit dem getrockneten Text in Kontakt kommt, so löst das wässrige Medium die das Pigment stabilisierende Schicht zumindest an, wodurch die Pigmentteilchen verschoben werden können. Dadurch verwischt oder verschmiert der Text. Dieser Trocknungsprozess dauert etliche Sekunden bis mehrere Minuten, in denen das Druckbild besonders empfindlich ist. Dieselben Probleme können auch bei einem Text auftreten, der mit einer pigmentierten Tinte auf Basis von Polymerteilchen ausgedruckt wurde.

Für pigmentierte Strahldrucktinten werden sehr häufig wasserlösliche oder in Wasser dispergierbare Polymere oder feinteilige Polymerdispersionen verwendet. Dies sind oft Homo- oder Copolymere auf Basis von Acrylat, Methacrylat und Styrol, sowie Copolymere auf Basis von Styrol und Acrylnitril. Diese Polymerdispersionen haben meist einen basischen oder ganz schwach sauren pH-Wert. Die Stabilisatoren werden daher auch von wässrigen basischen oder ganz schwach sauren Lösungen und auch von neutralem Wasser wieder gelöst oder angelöst.

Die in sogenannten Textmarkern oder Highlightern verwendeten Markierungsmittel sind üblicherweise wässrige Zubereitungen eines fluoreszierenden Färbemittels oder Tagesleuchtfarbstoffes, die oft zumindest schwach basisch sind. Pyranin (C.l. Solvent Green 7, Nr. 59.040), ein häufig verwendeter Farbstoff mit stark gelber Fluoreszenz, leuchtet z.B. am stärksten in einem alkalischen Bereich von pH 8 bis 12, insbesondere bei einem pH von 8 bis 10. Aus US-A 6169185 ist auch die Verwendung von Polyesterdispersionen zur Herstellung von fluoreszierenden Strahldrucktinten bekannt, die besondere Eigenschaften erfüllen müssen, um für den Strahldruck geeignet zu sein.

Wenn man daher einen von einem Tintenstrahldrucker mit pigmentierter oder pigmenthaltiger Tinte gedruckten Text mit einem eine alkalische Markierungsflüssigkeit enthaltenden Marker überstreicht, wird auch nach dem gänzlichen Trocknen der Tinte der Stabilisator der Tinte wieder angelöst, was zum Verwischen der Schrift durch Verschieben der Pigmentteilchen führt. Ganz besonders empfindlich reagiert ein solcher Text gegen Ende oder unmittelbar nach der Trocknungsphase. Dieses Problem tritt auch auf, wenn destilliertes Wasser für die Herstellung der Markierungsflüssigkeit verwendet wird und der pH-Wert in etwa neutral ist.

Eine Lösung des Problems, die sich anzubieten scheint, besteht darin, die Markierungsflüssigkeit im sauren Bereich einzustellen, da dann der Stabilisator, selbst wenn er von dem wässrigen Medium angelöst wird, sofort wieder ausgefällt werden könnte. Die Zugabe von Säure hat sich allerdings in der Praxis nicht als geeignet erwiesen, da einerseits Farbstoffe auf Änderungen des pH-Wertes häufig durch Farbumschläge reagieren und andererseits der Zusatz von Säuren die Markierungsflüssigkeit selbst instabilisiert. Markierungsflüssigkeiten, die Pyranin enthalten, zeigen bei einer sauren Einstellung keinerlei Fluoreszenz und wären somit für den vorgesehenen Verwendungszweck ungeeignet. Aber auch Markierungsflüssigkeiten mit einem pH-Wert im schwach sauren Bereich bringen keine Verbesserung der Situation, da ihre Acidität geringer ist als die Basizität der Stabilisatoren in den Tintenstrahldrucktinten und diese damit auf dem Papier beim Überstreichen trotzdem nicht spontan ausgefällt werden können.

Die Hersteller von Tintenstrahldrucktinten dahin zu bringen, ihre Produkte an die Bedingungen der Markierungstinten anzupassen, ist ebenfalls kein gangbarer Weg.

EP-A 0761783 beschreibt ein Aufzeichnungsmedium für einen Strahldrucker, bei dem das dispergierte Pigment durch Zugabe eines Salzes ausgefällt wird. Das Salz kann aber erst direkt beim Drucken zugegeben werden, da ansonsten die Dispersion instabil ist.

Bekannt ist auch aus WO 00/71629, dass durch Verwendung von Salzen, insbesondere von Alkalisalzen, ein transparenter Farbauftrag undurchsichtig gemacht werden kann.

Aus US-A 5 294 664 sind wässrige Dispersionen von fluoreszierenden Pigmenten bekannt, die durch Emulsionspolymerisation hergestellt werden können. In diesem Fall wird während des Herstellungsverfahrens ein schwerlösliches Salz als Pickerung-Emulgator zugesetzt, das in der fertigen Dispersion nicht mehr enthalten ist.

US-A 4 664 711 beschreibt eine Markierungstinte, die Titandioxid enthält und der fluoreszierende Farbstoffe zugesetzt sein können. Eine Markierungsflüssigkeit, die ein Überstreichen von Tintenstrahldrucktinte zulässt, wird hier jedoch nicht erwähnt.

Aufgabe der Erfindung war es daher, eine Markierungsflüssigkeit bereitzustellen, die auch bei dem Überstreichen von mit Tintenstrahldrucktinte, insbesondere mit pigmentierter Tinte geschriebenem Text, diesen nicht verwischt oder verschmiert und insbesondere den in der Tintenstrahldrucktinten enthaltenen Stabilisator auszufällen vermag, wobei die Markierflüssigkeit gleichzeitig ihre Stabilität behält.

Diese Aufgabe wird gelöst mit einer Marklerungsflüssigkeit, wie sie in den Ansprüchen definiert ist.

Eine erfindungsgemäße Markierungsfüssigkeit enthält eine Polymerdispersion mit Teilchen, die mit Markierungsmittel gefärbt sind, gegebenenfalls weitere Farbstoffe und Markierungsmittel, ein oder mehrere Salze eines mehrwertigen, insbesondere zwei- oder dreiwertigen Kations, Wasser sowie gegebenenfalls Feuchthaltemittel und weitere übliche Additive enthält, wobei das die die Polymerteilchen bildende Polymer ausgewählt ist aus der Gruppe Polyester, Polyesteramide, Polymere und Copolymere auf Basis von Acrylat oder Methacrylat mit einem Anteil an freien Carbonsäuregruppen von weniger als 10 Gew. %, Melamin-Formaldehyd-Sulfonamidharze und Mischungen davon und wobei die Gesamtmenge der Salze mehrwertiger Kationen in einem Bereich bis zur Sättigungsgrenze der Lösung liegt.

Überraschenderweise wurde festgestellt, daß die Verwendung einer Polymerdispersion, die mit Markierungsmittel beladene Polymerteilchen enthält, wobei die Polymere aus den oben genannten ausgewählt sind, in Kombination mit Salzen auf Basis von mehrwertigen Kationen in wässrigem Medium eine stabile Markierflüssigkeit ergibt, die beim Überstreichen von mit pigmentierter Tintenstrahltinte gedrucktem Text oder mit pigmentierter Tinte geschriebenem Text diesen nicht negativ beeinträchtigt.

Darüberhinaus führt der erfindungsgemäß vorgesehene Zusatz von Salzen mehrwertiger Kationen auch bei längerer Lagerung bei wechselnden Temperaturen zwischen -20°C und +50°C - Temperaturen, wie sie bei Transporten in unseren Klimazonen durchaus auftreten könne - zu keinen nachteiligen rheologischen Veränderungen oder Separationen, Ausflockungen, Koagulationen oder ähnlichern.

Kern der Erfindung ist daher die Kombination aus speziellen Polymerteilchen als Träger oder Stabilisatoren für das Markierungsmittel in Kombination mit Salzen auf Basis mehrwertiger, insbesondere zwei- oder dreiwertiger Kationen. Diese Kombination liefert einerseits eine stabile Markierungsflüssigkeit und führt andererseits beim Überstreichen von gedrucktem oder geschriebenem Text trotz wässrigem Lösungsmittel nicht zu einem Verschmieren. Mit der erfindungsgemäßen Markierungsflüssigkeit ist es sogar möglich, Dokumente bereits direkt nach dem Drucken zu markieren, ohne daß die Schrift verwischt. Dies war mit den bisher bekannten Textmarkern und Highlightern nicht möglich.

Der eine wesentliche Bestandteil der erfindungsgemäßen Markierungsflüssigkeit sind mit fluoreszierenden Farbstoffen oder Tagesfeuchtfarben beladene oder gefärbte Polymerteilchen. Es sind viele fluoreszierende und lumineszierende Farbstoffe und Leuchtfarben bekannt, die in den verschiedensten Farben leuchten. Alle diese bekannten Farbstoffe, die üblicherweise in Markern und Highlightern eingesetzt werden, sind hier geeignet. Sie werden im folgenden als "Markierungsmittel" bezeichnet. Die Markierungsmittel werden in der Regel verwendet, indem Polymerteilchen der definierten Art mit ihnen beladen werden. Derartige beladene Polymerteilchen sind in Form wässriger eingefärbter Dispersionen im Handel erhältlich. Sie werden üblicherweise hergestellt, indem Polymerisation und Einfärbung in situ erfolgen. Tinten in unterschiedlicher Einfärbung sind durch einfaches Abmischen und Verdünnen handelsüblicher Konzentrate erhältlich. So sind gelbe, blaue oder rote fluoreszierende Polymerdispersionen verfügbar, deren Mischung dann weitere Farbtöne ergibt.

Das erfindungsgemäß für die Polymerdispersion verwendete Polymer wird ausgewählt aus der Gruppe bestehend aus Polyestern, Polyesteramiden, Polymeren und Copolymeren auf Basis von Acrylat oder Methacrylat, Melamin-Formaldehyd-Sulfonamidharzen oder Mischungen davon. Es wurde gefunden, dass diese ausgewählten Polymere zur Herstellung stabiler Markierungstinten geeignet sind. Auch Mischungen dieser Polymere sind geeignet, wobei sowohl Mischungen von Polymeren einer Polymerart als auch Mischungen von Polymeren verschiedener der genannten Polymerarten verwendet werden können. Insbesondere werden Mischungen von Polymerdispersionen inbetracht gezogen, um Zubereitungen eines gewünschten Farbtons durch Mischung zu erzeugen.

Aus der Gruppe der Polyester kommen unter anderem solche Polyester inbetracht, die aus zwei oder mehrbasigen Carbonsäuremonomeren und zwei- bzw. mehrwertigen Alkoholen aufgebaut sind. Als Carbonsäuremonomere werden insbesondere geradkettige, verzweigte oder alicyclische Monomere mit zwei Carboxylgruppen, bevorzugt solche mit ein bis acht und insbesondere zwei bis sechs Kohlenstoffatomen oder reaktionsfähige Derivate davon in Betracht gezogen. Geeignete Carbonsäuremonomere sind z.B. Cyclohexandicarbonsäure, insbesondere 1,4- und 1,2-Cyclohexandicarbonsäure, sowie Adipinsäure und Bernsteinsäure und die Anhydride davon.

Als Alkohole werden zwei- oder mehrwertige geradkettige, verzweigte oder alicyclische Alkohole mit ein bis 10, bevorzugt zwei bis acht Kohlenstoffatomen verwendet. Beispiele sind Cyclohexandimethanol, Neopentylglykol, Ethylenglykol, Propylenglykol oder 2-Methyl-1,3-Propandiol. Der Polyester kann außer den genannten Carbonsäureeinheiten und Alkoholeinheiten weitere monofunktionelle Monomere, die insbesondere zum Kettenabbruch eingesetzt werden, enthalten. Beispiele hierfür sind Beispiele sind Methanol, Ethanol und Propanol.

Der Polyester wird geeigneterweise in Gegenwart des Markierungsmittels polymerisiert, sodaß das Markierungsmittel die Teilchen färbt und auf ihnen haften bleibt und nicht in die flüssige Phase wandert. Dispersionen von solchen mit Markierungsmittel gefärbten Polyestern, die für die erfindungsgemäße Markierungsflüssigkeit als Träger des Farbstoffes bzw. des Markierungsmittels in Betracht kommen, sind im Handel erhältlich und ihre Herstellung bedarf hier keiner näheren Erläuterung. Beispiele für geeignete Polyester und damit hergestellte gefärbte Dispersionen finden sich z.B. in US-Patent Nr. 6,169,185, auf das hier bezug genommen wird. Außerdem werden geeignete Dispersionen z.B. von den Firmen Mikuni, Sinloihi und Day-Glo Color Corporation angeboten und vertrieben. Tinten in unterschiedlicher Einfärbung sind in an sich bekannter Weise durch einfaches Abmischen und Verdünnen handelsüblicher Konzentrate erhältlich. Diesen Mischungen können dann noch übliche Additive, die unten beschrieben werden, zugesetzt werden.

Ein weiteres erfindungsgemäß verwendetes Polymer, das mit fluoreszierenden Farbstoffen beladen werden kann, ist Polyesteramidharz. Es handelt sich dabei um mit Fluoreszenzfarbstoffen, sogenannten Tagesleuchtfarben, eingefärbtes Polyesteramidharz in wässriger Dispersion. Derartige eingefärbte Polymere sind im Colour-Index nicht genannt, daher kann auch keine entsprechende Zuordnung erfolgen. Sie sind im Handel erhältlich und werden beispielsweise von der Firma SWADA (London)Ltd. unter dem Handelsnamen "Fiesta" vertrieben. Hierbei handelt es sich um feinteilige Pulver in unterschiedlichen Einfärbungen, welche unter Zusatz eines Stabilisierungsmittels, z.B. Hydroxyethylcellulose oder Natriumalginat, in Wasser dispergiert und anschließend mittels einer Kugelmühle oder einer ähnlichen Mahleinrichtung auf eine endgültige Teilchengröße im Bereich von 50 bis 500 nm vermahlen werden. Vorzugsweise werden farbige "Stammdispersionen" mit einem Polymergehalt zwischen 30 und 40 Gew.% weiterverarbeitet.

Eingefärbte Polyesteramidharzteilchen sind im Handel erhältlich als Polymerpulver in den unterschiedlichsten Einfärbungen mit Fluoreszenzfarbstoffen, sogenannten Tagesleuchtfarben, unter anderem von der Firma SWADA (London) Ltd, so dass dem Fachmann, nach entsprechender Aufbereitung, wie oben ausgeführt, eine breite Palette von unterschiedlich gefärbten Polymerdispersionen auf Basis von Polyesteramidharzen zur Verfügung steht, die er direkt weiterverarbeiten oder untereinander mischen und dann weiterverarbeiten kann.

Bei der Verarbeitung von Polyesteramidharzdispersionen ist darauf zu achten, dass das Dispergieren, Mischen und Mahlen im Wesentlichen bei Raumtemperatur erfolgt und dass eine Temperatur von 40°C möglichst nicht überschritten wird. Im Bedarfsfall sollte während des Mahlens gekühlt werden. Außerdem sollte bei der Verwendung von Polyesteramidharzen der pH-Wert der wässrigen Mischung kontrolliert und ggf. durch Zugabe von verdünnter Mineralsäure, z.B. Salzsäure oder von verdünnter Carbonsäure, z.B. Essigsäure oder Zitronensäure, auf einen Wert von 5 bis 7, vorzugsweise von 5,6 bis 6,3 eingestellt werden.

Die vorgenannten handelsüblichen Polyesteramidpulver sind bei Beachtung der genannten Randbedingungen sehr leicht zu wässrigen Polymerdispersionen zu verarbeiten und später leicht zu Markierungsmitteln in der geeigneten Farbe weiterzuverarbeiten. Grundsätzlich ist es aber auch möglich, Polyesteramidteilchen im Wege der Dispersionspolymerisation herzustellen und sie nachträglich mit geeigneten Färbemitteln einzufärben. Hierbei kann ein Teil der Färbemittel in der wässrigen Lösung verbleiben. Derart hergestellte Markierungsmittel sind of weniger farbkräftig und lichtbeständig. Den so erhaltenen Markierungsmitteln können anschließend noch übliche und dem Fachmann geläufige Additive, wie oberflächenaktive Substanzen, Feuchthaltemittel, pH-Stabilisatoren, Konservierungsmittel usw. zugesetzt werden.

Bei der Verarbeitung von Polyesteramidharzdispersionen ist darauf zu achten, dass das Dispergieren, Mischen und Mahlen im Wesentlichen bei Raumtemperatur erfolgt und dass eine Temperatur von 40°C möglichst nicht überschritten wird. Im Bedarfsfall sollte während des Mahlens gekühlt werden. Außerdem sollte bei der Verwendung von Polyesteramidharzen der pH-Wert der wässrigen Mischung kontrolliert und ggf. durch Zugabe von verdünnter Mineralsäure, z.B. Salzsäure oder von verdünnter Carbonsäure, z.B. Essigsäure oder Zitronensäure, auf einen Wert von 5 bis 7, vorzugsweise von 5,6 bis 6,3 eingestellt werden.

Auch die vorgenannten handelsüblichen Harzdispersionen sind bei Beachtung der genannten Randbedingungen sehr leicht zu wässrigen Polymerdispersionen zu verarbeiten und später leicht zu Markierungsmitteln in der geeigneten Farbe weiterzuverarbeiten. Grundsätzlich ist es aber auch möglich, die Polymerteilchen im Wege der Polykondensation herzustellen und sie nachträglich mit geeigneten Färbemitteln einzufärben. Hierbei kann ein Teil der Färbemittel in der wässrigen Lösung verbleiben. Derart hergestellte Markierungsmittel sind of weniger farbkräftig und lichtbeständig. Den so erhaltenen Markierungsmitteln können anschließend noch übliche und dem Fachmann geläufige Additive, wie oberflächenaktive Substanzen, Feuchthaltemittel, pH-Stabilisatoren, Konservierungsmittel usw. zugesetzt werden.

Zur Herstellung der erfindungsgemäßen Zubereitung kann auch eine Polymerdispersion mit Polymerteilchen auf Basis von Homo- oder Copolymeren von Acrylat oder Methacrylat, welche keine oder nur geringe Anteile an freien Carbonsäuregruppen aufweisen, als Träger oder Stabilisator verwendet werden, wobei der Anteil an freien Carbonsäuregruppen kleiner als 10 Gew.-%, bevorzugt kleiner als 5 Gew.-%, bezogen auf die Trockensubstanz an Polymer ist.

In einer bevorzugten Ausführungsform werden die Polymerteilchen durch Kondensationsreaktion eines zwei- oder mehrwertigen Alkohols mit einer zwei- bzw. mehrbasigen Säure in Gegenwart des fluoreszierenden Farbstoffs erhalten

In einer weiteren Ausführungsform werden die das Markierungsmittel tragenden Polyesterteilchen durch Emulsionspolymerisation in Anwesenheit des Markierungsmittels hergestellt.

Zur Herstellung der erfindungsgemäßen Zubereitung werden die oben definierten Polymerteilchen auf Basis von Homo- oder Copolymeren von Acrylat oder Methacrylat mit fluoreszierenden oder lumineszierenden Farbstoffen oder Leuchtfarben beladen. Alle bekannten, oben beschriebenen Markierungsmittel sind geeignet. Gefärbte Dispersionen derartiger Polymerteilchen sind auch im Handel erhältlich, beispielsweise von der Firma MIKUNI, Japan, unter Handelsbezeichnungen wie z.B. "Victoria Yellow", oder von der Firma DAYGLO, USA, unter Handelsbezeichnungen wie "Saturn Yellow ECX".

Bei diesen Produkten handelt es sich beispielsweise um eingefärbte Dispersionen von Methacrylonitril/Methacrylsäure-Copolymer oder Glycidylmethacrylat/Methylmethacrylat/Styrol-Copolymer oder um Mischungen der beiden Dispersionen von Polymerteilchen.

Sie werden beispielsweise dadurch hergestellt, dass Polymerisation und Einfärbung im Wege der 'Dispersionspolymerisation in situ erfolgen. Tinten in unterschiedlicher Einfärbung sind durch einfaches Abmischen und Verdünnen handelsüblicher Konzentrate erhältlich. So sind gelbe, rote oder blaue Polymerdispersionen auf Basis von Homo- oder Copolymeren von Acrylat oder Methacrylat, welche keine oder nur geringe Anteil an freien Carbonsäuregruppen aufweisen, wobei der Anteil an freien Carbonsäureruppen kleiner als 10 Gew.-%, bevorzugt kleiner als 5 Gew.-%, bezogen auf die Trockensubstanz, ist als Polymer verfügbar, deren Mischung weitere Farbtöne ergibt. Grundsätzlich ist es aber auch möglich, Polymerteilchen im Wege der Dispersionspolymerisation herzustellen und sie nachträglich mit geeigneten Färbemitteln einzufärben, mit den Problemen wie oben für die Polyesteramide beschrieben.

Zur Herstellung der erfindungsgemäßen Zubereitung kann auch eingefärbtes Melamin-Formaldehyd-Sulfonamidharz in einer wässrigen Dispersion eingesetzt werden. Derartige eingefärbte Polymere sind im Colour-Index nicht genannt, daher kann auch keine entsprechende Zuordnung erfolgen. Sie sind im Handel erhältlich und werden beispielsweise von der Firma SWADA (London)Ltd. unter dem Handelsnamen "Fiesta" vertrieben. Hierbei handelt es sich um feinteilige wässrige Dispersionen in unterschiedlichen Einfärbungen, welche zweckmäßigerweise vor der weiteren Verarbeitung zu Markierungsflüssigkeiten nochmals mittels einer Kugelmühle oder einer ähnlichen Mahleinrichtung auf eine Teilchengröße im Bereich von 50 bis 500 nm vermahlen werden.

Eingefärbte Polymerteilchen aus Melamin-Formaldehyd-Sulfonamidharz sind im Handel erhältlich als Polymerpulver in den unterschiedlichsten Einfärbungen mit Fluoreszenzfarbstoffen, sogenannten Tagesleuchtfarben, unter anderem von der Firma SWADA (London) Ltd, so dass dem Fachmann, nach entsprechender Aufbereitung, wie oben ausgeführt, eine breite Palette von unterschiedlich gefärbten Polymerdispersionen auf Basis dieser Harze zur Verfügung steht, die er direkt weiterverarbeiten oder untereinander mischen und dann weiterverarbeiten kann.

Der weitere wesentliche Bestandteil der erfindungsgemäßen Markierflüssigkeit ist ein Salz auf Basis eines mehrwertigen Kations, insbesondere eines zwei- oder dreiwertigen Kations. Es können auch Mischungen von Salzen verschiedener, insbesondere mehrwertiger Kationen eingesetzt werden. Auch Salze von vierwertigen Kationen sind geeignet, wenn sie in wässriger Lösung stabil sind, allein oder in Kombination mit weiteren Salzen auf Basis zwei- und/oder dreiwertiger Kationen. Die Salzbildung kann dabei auch in situ, durch Neutralisation einer geeigneten Base mit einer Säure oder durch die Umsetzung eines Metalloxids mit einer Säure, erfolgen. Bevorzugt werden dabei solche Salze verwendet, die die Farbe der Markierungsflüssigkeit durch ihre Eigenfarbe in wässriger Lösung möglichst wenig beeinflussen. Salze der gängigen einwertigen Kationen, wie Natrium, Kalium und Ammonium haben sich als nicht günstig erwiesen.

Als besonders geeignet haben sich Salze zwei- und/oder dreiwertiger Kationen erwiesen, vor allem von solchen, die sich von Magnesium, Calcium, Zink, Zinn, Kobalt, Eisen(II), Eisen(III), Aluminium und Titan ableiten.

Das als Gegenion verwendete Anion ist unkritisch und kann z.B. das Anion einer anorganischen oder organischen Säure, z.B. einer Halogensäure, wie Salzsäure, von Schwefelsäure oder Salpetersäure sowie einer ein- oder mehrwertigen Carbonsäure insbesondere mit ein bis 10 Kohlenstoffatomen sein. Bevorzugt wird das Gegenanion des mehrwertigen Kations ausgewählt aus Halogeniden, z. B. Chloriden Nitraten Sulfaten, geradkettigen, verzweigten oder alicyclischen Alkanen mit ein bis zehn insbesondere zwei bis vier Kohlenstoffatomen und mit ein, zwei oder drei Carboxylgruppen, Phosphaten, Boraten oder Mischungen davon. Besonders bevorzugt als Anionen sind Chlorid, Nitrat, Sulfat, Acetat, Citrate und Propionat. Geeignet sind auch Borat und Phosphate. Besonders gute Ergebnisse wurden erzielt mit Magnesiumchlorid, Calciumchlorid, Zinkchlorid, Zinkacetat, Zinknitrat, Zinnchlorid, Eisen-II-Sulfat, Eisen-III-Chlorid, Aluminiumchlorid, Aluminiumacetat, Aluminiumhydroxidacetat, Titan-IV-Chlorid und anderen.

Die Auswahl des Salzes eines mehrwertigen Kations erfolgt unter anderem auch im Hinblick auf die gewünschte Farbe der Markierungflüssigkeit. Einige der Salze, insbesondere von Eisen, Kobalt und Titan, weisen gelöst eine starke Eigenfarbe auf und können daher nur für ebenfalls stark gefärbte Markierflüssigkeiten verwendet werden.

Die Gesamtmenge des Salzes liegt in einem Bereich bis zur Sättigung der Lösung und bevorzugt zwischen 0,3 und 10 Gew.-%, besonders bevorzugt zwischen 1 und 10 Gew.-%. Unter 0,3 Gew.-% ist die Wirkung nicht mehr ausreichend, während mehr als 10 Gew.-% keine weitere Verbesserung der Eigenschaften mehr bringen. Besonders bevorzugt liegt die Einsatzmenge zwischen 0,8 und 7 Gew.-% und speziell für Polyester zwischen 2 und 8 Gew.-%, insbesondere zwischen 1,2 und 5 Gew.-%, speziell für Polyester zwischen 3 und 6 Gew.-%. Die Gewichtsprozentangaben beziehen sich dabei jeweils auf die Gesamtmenge der Markierungsflüssigkeit.

Die erfindungsgemäße Markierungsflüssigkeit kann außer dem bzw. den eingefärbten Polymerteilchen und dem bzw. den Salzen mehrwertiger Kationen noch weitere für derartige Markierungsflüssigkeiten übliche Inhaltsstoffe enthalten.

Das Basismedium der erfindungsgemäßen Markierungsflüssigkeit ist wässrig, so daß Wasser den Hauptteil der Flüssigkeit bildet. Gegebenenfalls können auch in geringerem Anteil wasserlösliche Lösungsmittel enthalten sein, soweit dies zweckdienlich erscheint.

Als Zusatzstoffe kommen insbesondere Feuchthaltemittel bzw. Trocknungsverzögerer in Betracht. Hier sind die üblicherweise für Markierungsmittel eingesetzten Mittel zu nennen. Insbesondere geeignet sind Glycerin, Diglycerin, Triglycerin, Diglykol, Propylenglykol, Dipropylenglykol, Butylenglykole, Hexylenglykole, Diethylenglykol, Triethylenglykol, Sorbit, Mannit, Xylit, Glucose, Fructose, Saccharose, Harnstoff sowie weitere handelsübliche Produkte. Die Feuchthaltemittel werden in den üblicherweise verwendeten Mengen eingesetzt, bevorzugt in einem Anteil von 3 bis 15 Gew.-%.

Die erfindungsgemäße Markierungsflüssigkeit kann in an sich bekannter Weise zur Herstellung von Textmarkern und Highlightern eingesetzt werden. Die damit hergestellten Marker sind besonders geeignet zur Textmarkierung von mit wasserlöslicher Tinte gedruckten oder geschriebenen Texten.

Ein weiterer Gegenstand der Erfindung ist daher die Verwendung der Markierungsflüssigkeit zur Herstellung von Markierungsstiften, insbesondere solchen zur Markierung von mit pigmentierter oder pigmenthaltiger Tinte gedruckten und geschriebenen Texten.

Die Erfindung wird noch durch die folgenden Beispiele erläutert, ohne sie darauf zu beschränken. Die in den Beispielen angegebenen Mengen sind jeweils in Gew.-% bezogen auf die Gesamtmenge der Markierungsflüssigkeit angegeben. Zur Benennung der eingesetzten nichtionischen Tenside wurden international übliche Freinamen der INCI-Nomenklatur (INCI = International Cosmetic Ingredient Dictionary and Handbook) verwendet.

### Beispiel 1 (Markierungsflüssigkeit gelb fluoreszierend)

| | |
|---|---|
| Polyesterdispersion, gelb fluoreszierend | 70,000 |
| Zinkchlorid | 5,000 |
| Glycerin | 5,000 |
| Wasser, demineralisiert | 20,000 |

Zur Herstellung wird die Polyesterdispersion in einem geeigneten Behältnis vorgelegt und mit Wasser verdünnt, danach wird das Glycerin langsam zugegeben und dann das Zinkchlorid unter Rühren langsam zugegeben und 15 Minuten nachgerührt.

### Beispiel 2 (Markierungsflüssigkeit, rot fluoreszierend)

| | |
|---|---|
| Polyesterdispersion, rot fluoreszierend | 70,000 |
| Aluminiumchlorid | 4,000 |
| Sorbitol, 70 Gew.-% in Wasser | 8,000 |
| Wasser, demineralisiert | 18,000 |

Die Herstellung erfolgt analog Beispiel 1.

### Beispiel 3 (Markierungsflüssigkeit, orange fluoreszierend)

| | |
|---|---|
| Polyesterdispersion, rot fluoreszierend | 25,000 |
| Polyesterdispersion, gelb fluoreszierend | 45,000 |
| Magnesiumchlorid | 2,500 |
| Aluminiumchlorid | 1,500 |
| Sucrose (Rohrzucker) | 4,500 |
| Wasser | 21,500 |

Die Herstellung erfolgt analog Beispiel 1.

### Beispiel 4 (Markierungsflüssigkeit grün)

| | |
|---|---|
| Polyesterdispersion, gelb fluoreszierend | 41,000 |
| Polyesterdispersion, blau | 29,000 |
| Aluminiumhydroxidacetat | 2,000 |
| Calciumchlorid | 3,500 |
| Triglycerin | 5,500 |
| Wasser, demineralisiert | 19,000 |

Die Herstellung erfolgt analog Beispiel 1.

Gegebenenfalls können den fertigen Mischungen noch geeignete Konservierungsmittel zugesetzt werden. Geruchsempfindliche Personen können sich eventuell an dem leichten Essiggeruch von Produkten auf Basis von Acetaten stören. Daher werden die Chloride vorgezogen.

Es empfiehlt sich, die fertigen Ansätze durch ein Tuch zu filtrieren, um eventuelle Festkörper abzutrennen. Die gewonnenen Tinten eignen sich direkt zur Abfüllung in Markiergeräte und können in üblicher Weise weiterverarbeitet werden. Sie zeichnen sich durch niedrige Viskosität und hervorragende Leuchtkraft aus und können auch gut auf frischen Ausdrucken von Tintenstrahldruckern oder auf frischen handschriftlichen Notizen verwendet werden.

### Beispiel 5 (Markierungsflüssigkeit, gelb fluoreszierend)

| | |
|---|---|
| Saturn Yellow ECX 17 (DAYGLO) | 25,000 |
| Zinkoxid, wasserfrei | 2,000 |
| Essigsäure 80% (VN) | 5,000 |
| Diethylenglycol | 10,000 |
| Konservierungsmittel | 0,150 |
| Wasser, demineralisiert | 57,850 |

Zur Herstellung wird das Zinkoxid in der Essigsäure gelöst, gegebenenfalls muss dabei leicht erwärmt werden. In einem geeigneten Behältnis wird die Dispersion von Saturn Yellow ECX 17 vorgelegt und unter leichtem Rühren mit einem Propellerrührer mit der gleichen Menge Wasser verdünnt. Danach wird das Diethylenglycol und das Konservierungsmittel zugesetzt. Die entstandene Lösung von Zinkacetat wird mit der Restmenge an demineralisiertem Wasser verdünnt und langsam dem Ansatz zufließen lassen. Man rührt noch 30 Minuten nach, stellt gegebenenfalls den pH-Wert auf 5,3 bis 5,6 ein und filtriert den Ansatz anschließend durch ein Tuch. Man erhält so eine gelbe, opake Markierungsflüssigkeit mit starker gelber Fluoreszenz.

### Beispiel 6 (Markierungsflüssigket, blau fluoreszierend)

| | |
|---|---|
| Viktoria Blue G 25 (MIKUNI) | 25,000 |
| Zinkchlorid, wasserfrei | 8,000 |
| 1,2-Propylenglycol | 20,000 |
| Konservierungsmittel | 0,150 |
| Wasser, demineralisiert | 46,850 |

Zur Herstellung wird das Zinkoxid in einer Teilmenge Wasser gelöst. Die Dispersion von Viktoria Blue G 25 wird in einem geeigneten Gefäß vorgelegt und unter leichtem Rühren mit einem Propellerrührer gerührt. Anschließend wird das restliche Wasser zugesetzt. Man lässt anschließend das 1,2-Propylenglycol und das Konservierungsmittel zufließen und dosiert dann die Lösung von Zinkchlorid langsam zu. Man stellt den pH-Wert mit Essigsäure auf 5,3 bis 5,6 ein und filtriert den Ansatz durch ein Tuch. Erhalten wird eine leuchtend blaue, opake Markierungsflüssigkeit, die auf Papier eine schöne blaue Fluoreszenz zeigt.

### Beispiel 7 (Markierungsflüssigkeit, rot fluoreszierend)

| | |
|---|---|
| Rocket Red ECX 13 (DAYGLO) | 30,000 |
| Zinkchlorid, wasserfrei | 3,000 |
| 1,2-Propylenglycol | 15,000 |
| Konservierungsmittel | 0,150 |
| Wasser, demineralisiert | 51,850 |

Die Herstellung erfolgt analog Beispiel 6. Man erhält eine leuchtend rote, opake Markierungsflüssigkeit mit starker roter Fluoreszenz.

### Beispiel 8 (Markierungsflüssigkeit, grün fluoreszierend)

| | |
|---|---|
| Saturn Yellow ECX 17 (DAYGLO) | 30,000 |
| C.I. Acid Blue 9 (Nr. 42090) | 0,300 |
| Zinkchlorid, wasserfrei | 5,000 |
| 1,2-Propylenglycol | 15,000 |
| Konservierungsmittel | 0,150 |
| Wasser, demineralisiert | 49,550 |

Die Herstellung efolgt analog Beispiel 6.
Gegebenenfalls können den fertigen Mischungen noch weitere geeignete Konservierungsmittel zugesetzt und die pH-Werte durch Zusatz von Säuren oder Laugen auf den gewünschten Wert eingestellt werden. Es können auch Puffersubstanzen zur Stabilisierung des erwünschten pH-Wertes zugesetzt werden.

Es empfiehlt sich, die Ansätze zu filtrieren, beispielsweise durch ein Tuch, um evtl. Feststoffe abzutrennen. Die gewonnenen Tinten eignen sich direkt zur Abfüllung in Markiergeräte wie Textmarker oder Highlighter und können in üblicher Weise weiterverarbeitet werden. Sie zeichnen sich durch niedrige Viskosität und hervorragende Leuchtkraft aus und können auch gut auf frischen Ausdrucken von Tintenstrahldruckern oder auf frischen handschriftlichen Notizen verwendet werden.

### Beispiel 9 - Herstellung einer wässrigen Pigmentdispersion

| | |
|---|---|
| Fiesta Solar Yellow NFS-7 | 40,000 |
| Natriumalginat-Lösung (5 Gew.-%) | 10,000 |
| Konservierungsmittel | 0,150 |
| Ceteareth-20 | 2,000 |
| Wasser, demineralisiert | 47,850 |

Das Ceteareth-20 (nichtionisches Tensid) wird in einem separaten Gefäß in etwa der zehnfachen Wassermenge gelöst; ggf. ist leicht zu erwärmen. In einem geeigneten Behältnis wird die restliche Wassermenge vorgelegt, dann wird die separat hergestellte Natriumalginatlösung zugesetzt und Konservierungsmittel und die Tensidlösung zugegeben. Unter Rühren mit einem hochtourigen Rührer, z.B. einer Zahnscheibe, wird dann bei etwa 1500 U/min das Pigmentpulver langsam zugestreut und die Mischung bei Raumtemperatur so lange gerührt, bis eine homogene Dispersion entstanden ist. Die Dispersion wird anschließend mindestens zweimal durch eine Kugelmühle, z.B. FRYMA oder NETZSCH, passiert, bis die gewünschte Teilchengröße im Bereich zwischen 50 nm und 500 nm erreicht ist. Man erhält eine gelb fluoreszierende Lösung. Diese "Stammdispersion" wird mit verdünnter Salzsäure oder Zitronensäurelösung (oder einer anderen geeigneten Mineralsäure oder Carbonsäure) auf einen pH-Wert von 5 bis 7, vorzugsweise 5,5 bis 6,5 eingestellt und, wie nachstehend beschrieben, zu Markierungsflüssigkeiten verarbeitet.

In analoger Weise können aus Fiesta Laser Red (rote Fluoreszenz), Fiesta Stellar Green NFS-8 (grüne Fluoreszenz), Fiesta Margenta NFS-10 (rotviolette Fluoreszenz), Fiesta Comet Blue NFS-60 (blaue Fluoreszenz) oder Fiesta Astral Pink NFS-1 (zartrosa) weitere "Stammdispersionen" zur Herstellung von Markierungsflüssigkeiten hergestellt werden. Wesentlich ist dabei, dass die Temperatur der Mischung während des Verarbeitungsprozesses nicht über 40°C steigt, weil dann die Fluoreszenz der Mischungen leidet.

### Beispiel 10 (Markierungsflüssigkeit, gelb fluoreszierend)

| | |
|---|---|
| Fiesta Solar Yellow NFS-7 (40 gew.-%ig) | 45,000 |
| Zinkacetat | 3,000 |
| 1,2-Propylenglycol | 10,000 |
| Ceteareth-20 | 2,000 |
| Konservierungsmittel | 0,150 |
| Wasser, demineralisiert | 39,850 |

In einem separaten Gefäß wird das Zinkacetat in einer ausreichenden Menge gelöst (Lösung 1). Das Ceteareth-20 wird in einem separaten Gefäß in der Restmenge Wasser gelöst und dann Konservierungsmittel und 1,2-Propylenglycol zugegeben (Lösung 2). Die "Stammdispersion" wird in einem geeigneten Gefäß vorgelegt. Unter leichtem Rühren mit einem Propellerrührer wird nun die Lösung 2 zugesetzt und 5 Minuten gerührt. Danach wird unter etwas stärkerem Rühren die Lösung 1 zugegeben. Man rührt noch 30 Minuten nach, stellt den pH-Wert auf 5,3 bis 5,6 ein und filtriert den Ansatz anschließend durch ein Tuch. Man erhält so eine gelbe, opake Markierungsflüssigkeit mit starker gelber Fluoreszenz und ausgezeichneter Lichtstabilität, die in üblicher Weise zur Herstellung von Markiergeräten verwendet werden kann.

### Beispiel 11 (Markierungsflüssigkeit, blau fluoreszierend)

| | |
|---|---|
| Fiesta Comet Blue NFS-60 (40 gew.-%ig) | 16,000 |
| Zinkchlorid, wasserfrei | 4,500 |
| 1,2-Propylenglycol | 10,000 |
| Ceteareth-20 | 2,000 |
| Konservierungsmittel | 0,150 |
| Wasser, demineralisiert | 67,350 |

Die Herstellung erfolgt analog zu Beispiel 10. Man erhält eine blaue Markierungsflüssigkeit mit schwach blauer Fluoreszenz und sehr guter Lichtstabilität.

### Beispiel 12 (Markierungsflüssigkeit, rot fluoreszierend)

| | |
|---|---|
| Fiesta Laser Red NFS-3 (40 gew.-%ig) | 50,000 |
| Zinkoxid, wasserfrei | 3,000 |
| Essigsäure (80% V/V) | 6,500 |
| 1,2-Propylenglycol | 12,500 |
| Ceteareth-20 | 2,000 |
| Konservierungsmittel | 0,150 |
| Wasser, demineralisiert | 25,850 |

Zur Herstellung wird das Zinkoxid in der Essigsäure gelöst, wobei die Essigsäure vorher etwa 1:1 mit Wasser verdünnt wurde. Die Herstellung erfolgt ansonsten analog zu Beispiel 10. Man erhält eine leuchtend rote, opake Markierungsflüssigkeit mit starker roter Fluoreszenz und ausgezeichneter Lichtstabilität. Neben der Anwendung in Markiergeräten eignet sich diese Farbe auch gut als Effektfarbe in Faserschreibern mit dünnerer Auftragspitze (so genannte "Neonschreiber").

### Beispiel 13 (Markierungsflüssigkeit, grün fluoreszierend)

| | |
|---|---|
| Fiesta Solar Yellow NFS-7 (40 gew.-%ig) | 35,000 |
| C.I. Acid Blue 9 (Nr. 42090) | 0,300 |
| Zinkchlorid, wasserfrei | 3,500 |
| 1,2-Propylenglycol | 12,000 |
| Pareth-25-12 | 2,000 |
| Konservierungsmittel | 0,150 |
| Wasser, demineralisiert | 47,050 |

Die Herstellung erfolgt analog zu Beispiel 10, wobei dem Ansatz vor Zugabe der Lösungen 1 und 2 zunächst der in Wasser leicht lösliche Farbstoff C.I. Acid Blue 9 zugesetzt wird. Danach wird weiter verfahren, wie unter Beispiel 10 beschrieben. Man erhält eine opake Markierungsflüssigkeit mit deutlicher grüner Fluoreszenz und guter Lichtstabilität.

### Beispiel 14 (Markierungsflüssigkeit, grün fluoreszierend)

| | |
|---|---|
| Fiesta Solar Yellow NFS-7 (40 gew.-%ig) | 37,500 |
| Fiesta Comet Blue NFS-60 (40 gew.-%ig) | 12,500 |
| Magnesiumsulfat | 4,000 |
| 1,4-Butylenglycol | 13,500 |
| Ceteareth-20 | 2,000 |
| Konservierungsmittel | 0,150 |
| Wasser, demineralisiert | 30,350 |

Die Herstellung erfolgt analog Beispiel 10. Man erhält eine opake grüne Markierungsflüssigkeit mit gelbgrüner Fluoreszenz und sehr guter Lichtstabilität.

### Beispiel 15 (Markierungsflüssigkeit, orange fluoreszierend)

| | |
|---|---|
| Fiesta Solar Yellow NFS-7 (40 gew.-%ig) | 30,000 |
| Fiesta Laser Red NFS-3 (40 gew.-%ig) | 20,000 |
| Zinkacetat | 3,500 |
| Saccharose | 10,000 |
| Oleth-25 | 2,000 |
| Konservierungsmittel | 0,150 |
| Wasser, demineralisiert | 34,350 |

Die Herstellung erfolgt analog zu Beispiel 10. Man erhält eine opake Dispersion mit sehr schöner orangener Fluoreszenz und ausgezeichneter Lichtstabilität. Neben der Verwendung in Markiergeräten eignet sich auch diese Farbe besonders gut für so genannte "Neonschreiber".

### Beispiel 16 (Markierungsflüssigkeit, pink fluoreszierend)

| | |
|---|---|
| Fiesta Astral Pink NFS-1 (40 gew.-%ig) | 35,000 |
| Magnesiumsulfat | 3,000 |
| Sorbitol (70 gew.-%ig) | 10,000 |
| Pareth-25-12 | 2,000 |
| Konservierungsmittel | 0,150 |
| Wasser, demineralisiert | 49,850 |

Die Herstellung erfolgt analog zu Beispiel 10. Man erhält eine zartrosa gefärbte, opake Markierungsflüssigkeit mit hellroter Fluoreszenz und guter Lichtstabilität. Sie eignet sich ebenfalls gut für so genannte "Neonschreiber".

Gegebenenfalls können den fertigen Mischungen noch weitere geeignete Konservierungsmittel zugesetzt und die pH-Werte durch Zusatz von Säuren oder Laugen auf den gewünschten Wert eingestellt werden. Es können auch Puffersubstanzen zur Stabilisierung des erwünschten pH-Wertes zugesetzt werden.

Es empfiehlt sich, die Ansätze zu filtrieren, beispielsweise durch ein Tuch, um eventuelle Feststoffe abzutrennen. Die gewonnenen Tinten eignen sich direkt zur Abfüllung in Markiergeräte wie Textmarker oder Highlighter und können in üblicher Weise weiterverarbeitet werden. Sie zeichnen sich durch niedrige Viskosität und hervorragende Leuchtkraft aus und können auch gut auf frischen Ausdrucken von Tintenstrahldruckern oder auf frischen handschriftlichen Notizen verwendet werden.

### Beispiel 17 (Markierungsflüssigkeit, gelb fluoreszierend)

| | |
|---|---|
| Fiesta Solar Yellow T-7 | 30,000 |
| Zinkacetat | 3,000 |
| 1,2-Propylenglycol | 10,000 |
| Ceteareth-20 | 2,000 |
| Konservierungsmittel | 0,150 |
| Wasser, demineralisiert | 54,850 |

Das Ceteareth-20 wird in etwa 10 Teilen Wasser unter Erwärmen gelöst und zu der Farbdispersion unter Rühren zugesetzt. Danach wird diese Mischung wenigstens zweimal durch eine Rührwerkskugelmühle System FRYMA oder NETZSCH passiert, in ein geeignetes Gefäß überführt und die mittlere Teilchengröße bestimmt. In einem separaten Gefäß wird das Zinkacetat in etwa 10 Teilen Wasser gelöst. Dem Ansatz wird nun unter Rühren mit einer Zahnscheibe langsam das Konservierungsmittel und das 1,2-Propylenglycol zugesetzt. Danach wird langsam die Lösung von Zinkacetat eingegossen. Man rührt noch 30 Minuten nach, stellt den pH-Wert auf 5,3 bis 5,6 ein und filtriert den Ansatz anschließend durch ein Tuch. Man erhält so eine gelbe, opake Markierungsflüssigkeit mit starker gelber Fluoreszenz und ausgezeichneter Lichtstabilität, die in üblicher Weise zur Herstellung von Markiergeräten verwendet werden kann.

### Beispiel 18 (Markierungsflüssigkeit, blau fluoreszierend)

| | |
|---|---|
| Fiesta Comet Blue T-60 | 18,000 |
| Zinkchlorid, wasserfrei | 3,500 |
| 1,2-Propylenglycol | 10,000 |
| Ceteareth-20 | 2,000 |
| Konservierungsmittel | 0,150 |
| Wasser, demineralisiert | 66,350 |

Die Herstellung erfolgt analog zu Beispiel 17. Man erhält eine blaue Markierungsflüssigkeit mit schwach blauer Fluoreszenz und sehr guter Lichtstabilität.

### Beispiel 19 (Markierungsflüssigkeit, rot fluoreszierend)

| | |
|---|---|
| Fiesta Laser Red T-3 | 35,000 |
| Zinkoxid, wasserfrei | 3,000 |
| Essigsäure (80% VN) | 6,500 |
| 1,3-Butylenglycol | 12,500 |
| Oleth-25 | 2,000 |
| Konservierungsmittel | 0,150 |
| Wasser, demineralisiert | 40,850 |

Zur Herstellung wird das Zinkoxid in der Essigsäure gelöst, wobei die Essigsäure vorher etwa 1:1 mit Wasser verdünnt wurde. Die Herstellung erfolgt ansonsten analog zu Beispiel 17. Man erhält eine leuchtend rote, opake Markierungsflüssigkeit mit starker roter Fluoreszenz und ausgezeichneter Lichtstabilität. Neben der Anwendung in Markiergeräten eignet sich diese Farbe auch gut als Effektfarbe in Faserschreibern mit dünnerer Auftragspitze (so genannte "Neonschreiber").

### Beispiel 20 (Markierungsflüssigkeit, grün fluoreszierend)

| | |
|---|---|
| Fiesta Lunar Yellow GT-27 | 30,000 |
| C.I. Acid Blue 9 (Nr. 42090) | 0,300 |
| Zinkchlorid, wasserfrei | 3,500 |
| Sorbitol (70 Gew.-%) | 12,000 |
| Pareth-25-12 | 2,000 |
| Konservierungsmittel | 0,150 |
| Wasser, demineralisiert | 52,050 |

Die Herstellung erfolgt analog zu Beispiel 17, wobei dem Ansatz vor Zugabe der Zinkchlorid-Lösung zunächst der in Wasser leicht lösliche Farbstoff C.I. Acid Blue 9 zugesetzt wird. Danach wird weiter verfahren, wie unter Beispiel 17 beschrieben. Man erhält eine opake Markierungsflüssigkeit mit deutlicher grüner Fluoreszenz und guter Lichtstabilität.

### Beispiel 21 (Markierungsflüssigkeit, grün fluoreszierend)

| | |
|---|---|
| Fiesta Lunar Yellow GT-27 | 27,500 |
| Fiesta Comet Blue T-60 | 10,500 |
| Magnesiumsulfat | 4,000 |
| 1,4-Butylenglycol | 11,500 |
| Ceteareth-20 | 2,000 |
| Konservierungsmittel | 0,150 |
| Wasser, demineralisiert | 44,350 |

Die Herstellung erfolgt analog zu Beispiel 17. Man erhält eine opake grüne Markierungsflüssigkeit mit gelbgrüner Fluoreszenz und sehr guter Lichtstabilität.

### Beispiel 22 (Markierungsflüssigkeit, orange fluoreszierend)

| | |
|---|---|
| Fiesta Solar Yellow T-7 | 28,000 |
| Fiesta Laser Red GT-3 | 13,000 |
| Zinkacetat | 3,500 |
| Saccharose | 10,000 |
| Oleth-25 | 2,000 |
| Konservierungsmittel | 0,150 |
| Wasser, demineralisiert | 43.350 |

Die Herstellung erfolgt analog zu Beispiel 17. Man erhält eine opake Dispersion mit sehr schöner orangener Fluoreszenz und ausgezeichneter Lichtstabilität. Neben der Verwendung in Markiergeräten eignet sich auch diese Farbe besonders gut für so genannte "Neonschreiber".

### Beispiel 23 (Markierungsflüssigkeit, pink fluoreszierend)

| | |
|---|---|
| Fiesta Astral Pink GT-1 | 30,000 |
| Magnesiumsulfat | 3,000 |
| Sorbitol (70 gew.-%ig) | 10,000 |
| Pareth-25-12 | 2,000 |
| Konservierungsmittel | 0,150 |
| Wasser, demineralisiert | 54,850 |

Die Herstellung erfolgt analog zu Beispiel 17. Man erhält eine zartrosa gefärbte, opake Markierungsflüssigkeit mit hellroter Fluoreszenz und guter Lichtstabilität. Sie eignet sich ebenfalls gut für so genannte "Neonschreiber".

Gegebenenfalls können den fertigen Mischungen noch weitere geeignete Konservierungsmittel zugesetzt und die pH-Werte durch Zusatz von Säuren oder Laugen auf den gewünschten Wert eingestellt werden. Es können auch Puffersubstanzen zur Stabilisierung des erwünschten pH-Wertes zugesetzt werden.

Es empfiehlt sich, die Ansätze zu filtrieren, beispielsweise durch ein Tuch, um eventuelle Feststoffe abzutrennen. Die gewonnenen Tinten eignen sich direkt zur Abfüllung in Markiergeräte wie Textmarker oder Highlighter und können in üblicher Weise weiterverarbeitet werden. Sie zeichnen sich durch niedrige Viskosität und hervorragende Leuchtkraft aus und können auch gut auf frischen Ausdrucken von Tintenstrahldruckern oder auf frischen handschriftlichen Notizen verwendet werden.

## Patentansprüche

1. Markierungsflüssigkeit enthaltend eine Polymerdispersion mit Teilchen, die mit Markierungsmittel gefärbt sind, gegebenenfalls weitere Farbstoffe und Markierungsmittel, ein oder mehrere Salze eines mehrwertigen, insbesondere zweioder dreiwertigen Kations, Wasser sowie gegebenenfalls Feuchthaltemittel und weitere übliche Additive, wobei das die Polymerteilchen bildende Polymer ausgewählt ist aus der Gruppe Polyester, Polyesteramide, Polymere Copolymere auf Basis von Acrylat oder Methacrylat mit einem Anteil an freien Carbonsäuregruppen von weniger als 10 Gew.-%, Melamin-Formaldehyd-Sulfonamidharze und Mischungen davon und wobei die Gesamtmenge der Salze mehrwertiger Kationen in einem Bereich bis zur Sättigungsgrenze der Lösung liegt.

2. Markierungsflüssigkeit nach Anspruch 1 enthaltend Polyesterteilchen mit mindestens einem Markierungsmittel, gegebenenfalls weitere Farbstoffe und Markierungsmittel, ein oder mehrere Satze eines mehrwertigen Kations, Wasser, sowie gegebenenfalls Feuchthaltemittel und weitere übliche Additive.

3. Markierungsflüssigkeit nach Anspruch 1 enthaltend Polymerteilchen auf Basis von Polyesteramidharzen, mit mindestens einem Markierungsmittel, gegebenenfalls weitere Farbstoffe und Markierungsmittel, ein oder mehrere Salze eines mehrwertigen Kations, Wasser, sowie gegebenenfalls Feuchthaltemittel und weitere übliche Additive.

4. Markierungsflüssigkeit nach Anspruch 1 enthaltend Polymerteilchen auf Basis von Homo- oder Copolymeren von Acrylat oder Methacrylat, die keine oder nur geringe Anteile an freien Carbonsäuregruppen aufweisen, mit mindestens einem Markierungsmittel, gegebenenfalls weitere Farbstoffe und Markierungsmittel, ein oder mehrere Salze eines mehrwertigen Kations, Wasser, sowie gegebenenfalls Feuchthaltemittel und weitere übliche Additive.

5. Markierungsflüssigkeit nach Anspruch 1 enthaltend Polymerteilchen auf Basis von Melamin-Formaldehyd-Sulfonamidharz, mit mindestens einem Markierungsmittel, gegebenenfalls weitere Farbstoffe und Markierungsmittel, ein oder mehrere Salze eines mehrwertigen Kations, Wasser, sowie gegebenenfalls Feuchthaltemittel und weitere übliche Additive.

6. Markierungsflüssigkeit nach einem der vorhergehenden Ansprüche,
**dadurch gekennzeichnet, daß** Polymerteilchen, die mit verschiedenen fluoreszierenden. Farbstoffen oder Tagesleuchtfarben beladen sind, enthalten sind.

7. Markierungsflüssigkeit nach einem der vorhergehenden Ansprüche,
**dadurch gekennzeichnet, daß** die Polymerteilchen mit fluoreszierendem Farbstoff beladene Polymerteilchen sind.

8. Markierungsflüssigkeit nach einem der vorhergehenden Ansprüche,
**dadurch gekennzeichnet, daß** eine Kombination von fluoreszierenden Farbstoffen enthalten ist.

9. Markierungsflüssigkeit nach einem der vorhergehenden Ansprüche,
**dadurch gekennzeichnet, daß** die gefärbten Polymerteilchen in Form einer wässrigen Dispersion vorliegen.

10. Markierungsflüssigkeit nach einem der vorhergehenden Ansprüche,
**dadurch gekennzeichnet, daß** das Salz ein Salz eines zwei- oder dreiwertigen Kations oder eine Mischung davon ist.

11. Markierungsflüssigkeit nach einem der vorhergehenden Ansprüche,
**dadurch gekennzeichnet, daß** das Satz ein Salz von Magnesium, Calcium, Zink, Zinn, Kobalt, Eisen(II), Eisen(III), Aluminium und/oder Titan ist.

12. Markierungsflüssigkeit nach einem der vorhergehenden Ansprüche,
**dadurch gekennzeichnet, daß** das Gegenion des mehrwertigen Kations von einer anorganischen oder organischen Säure abgeleitet ist.

13. Markierungsflüssigkeit nach einem der vorhergehenden Ansprüche,
**dadurch gekennzeichnet, daß** das Gegenion des mehrwertigen Kations ausgewählt ist aus, Halogeniden, z.B. Chloriden, Nitraten, Sulfaten, geradkettigen, verzweigten oder alicyclischen Alkanen mit ein bis zehn, insbesondere zwei bis vier Kohlenstoffatomen und mit ein, zwei oder drei Carboxylgruppen, Phosphaten, Boraten oder Mischungen davon, wobei die Gesamtmenge des Salzes in der Markierungsftüssigkeit in einem Bereich zwischen 0,3 Gew.-% und der Sättigung der Lösung liegt.

14. Markierüngsflüssigkeit nach einem der vorhergehenden Ansprüche,
**dadurch gekennzeichnet, daß** das mehrwertige Kation Magnesium, Calcium, Zink oder Eisen(II) ist.

15. Markierungsflüssigkeit nach einem der vorhergehenden Ansprüche,
**dadurch gekennzeichnet, daß** das Kation Aluminium oder Eisen (III) ist.

16. Markierungsflüssigkeit nach einem der vorhergehenden Ansprüche,
**dadurch gekennzeichnet, daß** das Salz oder die Mischung der Salze in einem, Anteil von von 0,3 bis 10, Gew.-% enthalten ist.

17. Markierungsflüssigkeit nach Anspruch 16,
**dadurch gekennzeichnet, daß** das Salz oder die Mischung der Salze in einem Anteil von 2 bis 8 Gew.-%, insbesondere 0,8 bis 7 Gew.-% im Fall von Polyestern, bezogen auf die verwendete Markierungsflüssigkeit, enthalten ist.

18. Markierüngsflüssigkeit nach einem der vorhergehenden Ansprüche,
**dadurch gekennzeichnet, daß** als Feuchthaltemittel Glycerin, Diglycerin, Triglycerin, Diglykol, Propylenglykol, Dipropylenglykol, Butylenglykole, Hexylenglykole, Diethylenglykol, Triethylenglykol, Sorbit, Mannit, Xylit, Glucose, Fructose und/oder Harnstoff enthalten ist.

19. Markierungsflüssigkeit nach Anspruch 18,
**dadurch gekennzeichnet, daß** das Feuchthaltemittel in einem Anteil von 3 bis 15 Gew.-%, bezogen auf die Markierungsflüssigkeit, enthalten ist.

20. Markierungsflüssigkeit nach Anspruch 2,
**dadurch gekennzeichnet, daß** die Polyesterteilchen durch Kondensationsreaktion eines zwei- oder mehrwertigen Alkohols mit einer zwei- bzw. mehrbasigen Säure in Gegenwart des fluoreszierenden Farbstoffs erhältlich sind.

21. Markierungsflüssigkeit nach Anspruch 2,
**dadurch gekennzeichnet, daß** die das Markierungsmittel tragenden Polyesterteilchen durch Emulsionspolymerisation in Anwesenheit des Markierungsmittels herstellbar sind.

22. Markierungsflüssigkeit nach einem der vorhergehenden Ansprüche,
**dadurch gekennzeichnet, daß** die Gesamtmenge der Salze von mehrwertigen Kationen in einem Bereich von 0,3 Gew.% bis zur Sättigungsgrenze liegt.

23. Markierungsflüssigkeit nach einem der vorhergehenden Ansprüche,
**dadurch gekennzeichnet, daß** die Gesamtmenge der Salze von mehrwertigen Kationen in einem Bereich von 1 Gew.-% bis 10 Gew.-% liegt.

24. Verwendung der Markierungsflüssigkeit nach einem der Ansprüche 1 bis 23 zur Herstellung von Markern, Highlightern und Neonschreibern.

25. Verwendung der Markierüngsflüssigkeit nach einem der Ansprüche 1 bis 23 zum Markieren von mit wässriger pigmentierter Tinte gedruckten oder geschriebenen Texten.

## Claims

1. A marking liquid containing a polymer dispersion with particles which are coloured with marking agent, optionally further dyes and marking agents, one or more salts of a polyvalent, in particular di- or trivalent cation, water and optionally moisture retaining agents and further usual additives, wherein the polymer forming the polymer particles is selected from the group of polyesters, polyester amides, polymers and copolymers based on acrylate or methacrylate, with a proportion of free carboxylic groups of less than 10% by weight, melamine-formaldehyde-sulphonamide resins and mixtures thereof and wherein the total amount of the salts of polyvalent cations is in a range up to the saturation limit of the solution.

2. A marking liquid according to claim 1 containing polyester particles with at least one marking agent, optionally further dyes and marking agents, one or more salts of a polyvalent cation, water, and optionally moisture retaining agents and further usual additives.

3. A marking liquid according to claim 1 containing polymer particles based on polyester amide resins, with at least one marking agent, optionally further dyes and marking agents, one or more salts of a polyvalent cation, water, and optionally moisture retaining agents and further usual additives.

4. A marking liquid according to claim 1 containing polymer particles based on homo- or copolymers of acrylate or methacrylate which have no or only small proportions of free carboxylic acid groups, with at least one marking agent, optionally further dyes and marking agents, one or more salts of a polyvalent cation, water, and optionally moisture retaining agents and further usual additives.

5. A marking liquid according to claim 1 containing polymer particles based on melamine-formaldehyde-sulphonamide resin, with at least one marking agent, optionally further dyes and marking agents, one or more salts of a polyvalent cation, water, and optionally moisture retaining agents and further usual additives.

6. A marking liquid according to one of the preceding claims **characterised in that** polymer particles which are loaded with various fluorescent dyes or daylight colors are included.

7. A marking liquid according to one of the preceding claims **characterised in that** the polymer particles are polymer particles loaded with fluorescent dye.

8. A marking liquid according to one of the preceding claims **characterised in that** a combination of fluorescent dyes is included.

9. A marking liquid according to one of the preceding claims **characterised in that** the coloured polymer particles are present in the form of an aqueous dispersion.

10. A marking liquid according to one of the preceding claims **characterised in that** the salt is a salt of a di- or trivalent cation or a mixture thereof.

11. A marking liquid according to one of the preceding claims **characterised in that** the salt is a salt of magnesium, calcium, zinc, tin, cobalt, iron (II), iron (III), aluminium and/or titanium.

12. A marking liquid according to one of the preceding claims **characterised in that** the opposed ion of the polyvalent cation is derived from an inorganic or organic acid.

13. A marking liquid according to one of the preceding claims **characterised in that** the opposed ion of the polyvalent cation is selected from halides, for example chlorides, nitrates, sulphates, straight-chain, branched or alicyclic alkanes with one to ten and in particular two to four carbon atoms and with one, two or three carboxyl groups, phosphates, borates or mixtures thereof, wherein the total amount of the salt in the marking liquid is in a range of between 0.3% and saturation of the solution.

14. A marking liquid according to one of the preceding claims **characterised in that** the polyvalent cation is magnesium, calcium, zinc or iron (II).

15. A marking liquid according to one of the preceding claims **characterised in that** the cation is aluminium or iron (III).

16. A marking liquid according to one of the preceding claims **characterised in that** the salt or the mixture of the salts is contained in a proportion of 0.3 to 10% by weight.

17. A marking liquid according to claim 16 **characterised in that** the salt or the mixture of the salts is contained in a proportion of 2 to 8% by weight, in particular 0.8 to 7% by weight in the case of polyesters, with respect to the marking liquid used.

18. A marking liquid according to one of the preceding claims **characterised in that** the moisture retaining agent is glycerine, diglycerine, triglycerine, diglycol, propylene glycol, dipropylene glycol, butylene glycols, hexylene glycols, diethylene glycol, triethylene glycol, sorbitol, manitol, xylitol, glucose, fructose, and/or urea.

19. A marking liquid according to claim 18 **characterised in that** the moisture retaining agent is contained in a proportion of 3 to 15% by weight with respect to the marking liquid.

20. A marking liquid according to claim 2 **characterised in that** the polymer particles can be obtained by condensation reaction of a di- or polyvalent alcohol with a di- or polybasic acid in the presence of the fluorescent dye.

21. A marking liquid according to claim 2 **characterised in that** the polyester particles carrying the marking agent can be produced by emulsion polymerisation in the presence of the marking agent.

22. A marking liquid according to one of the preceding claims **characterised in that** the total amount of the salts of polyvalent cations is in a range of from 0.3% by weight to the saturation limit.

23. A marking liquid according to one of the preceding claims **characterised in that** the total amount of the salts of polyvalent cations is in a range of from 0.3% by weight to 10% by weight.

24. Use of the marking liquid according to one of claims 1 to 23 for the production of markers, highlighters and neon pens.

25. Use of the marking liquid according to one of claims 1 to 23 for marking texts written or printed with aqueous pigmented ink.

## Revendications

1. Liquide de marquage contenant une dispersion de polymères ayant des particules qui sont colorées avec des agents de marquage, éventuellement d'autres colorants et agents de marquage, un ou plusieurs sels d'un cation polyvalent, en particulier bivalent ou trivalent, de l'eau, ainsi qu'éventuellement des humectants et d'autres additifs usuels, dans lequel le polymère formant les particules de polymère est sélectionné dans le groupe composé des polyesters, des polyesteramides, des polymères et copolymères à base d'acrylate ou de méthacrylate et présentant une fraction en groupes ou groupements d'acide carboxylique libres inférieure à 10 % en masse, des résines de mélamine-formaldéhyde-sulfonamide et des mélanges de ceux-ci, et dans lequel la quantité totale des sels des cations polyvalents est comprise dans une gamme allant jusqu'à la limite de saturation de la solution.

2. Liquide de marquage selon la revendication 1, contenant des particules de polyester avec au moins un agent de marquage, éventuellement d'autres colorants et agents de marquage, un ou plusieurs sels d'un cation polyvalent, de l'eau, ainsi qu'éventuellement des humectants et d'autres additifs usuels.

3. Liquide de marquage selon la revendication 1, contenant des particules de polymère à base de résines de polyesteramide, avec au moins un agent de marquage, éventuellement d'autres colorants et agents de marquage, un ou plusieurs sels d'un cation polyvalent, de l'eau, ainsi qu'éventuellement des humectants et d'autres additifs usuels.

4. Liquide de marquage selon la revendication 1, contenant des particules de polymère à base d'homopolymères ou de copolymères d'acrylate ou de méthacrylate qui ne présentent pas ou ne présentent que de faibles proportions de groupes d'acide carboxylique libres, avec au moins un agent de marquage, éventuellement d'autres colorants et agents de marquage, un ou plusieurs sels d'un cation polyvalent, de l'eau, ainsi qu'éventuellement des humectants et d'autres additifs usuels.

5. Liquide de marquage selon la revendication 1, contenant des particules de polymère à base d'une résine de mélamine-formaldéhyde-sulfonamide, avec au moins un agent de marquage, éventuellement d'autres colorants et agents de marquage, un ou plusieurs sels d'un cation polyvalent, de l'eau, ainsi qu'éventuellement des humectants et d'autres additifs usuels.

6. Liquide de marquage selon l'une des revendications précédentes, **caractérisé en ce qu'**il contient des particules de polymère qui sont chargées de différents colorants fluorescents ou couleurs lumineuses.

7. Liquide de marquage selon l'une des revendications précédentes, **caractérisé en ce que** les particules de polymère sont des particules de polymère chargées d'un colorant fluorescent.

8. Liquide de marquage selon l'une des revendications précédentes, **caractérisé en ce qu'**il contient une combinaison de colorants fluorescents.

9. Liquide de marquage selon l'une des revendications précédentes, **caractérisé en ce que** les particules de polymère colorées se présentent sous la forme d'une dispersion aqueuse.

10. Liquide de marquage selon l'une des revendications précédentes, **caractérisé en ce que** le sel est un sel d'un cation bivalent ou trivalent, ou un mélange de ceux-ci.

11. Liquide de marquage selon l'une des revendications précédentes, **caractérisé en ce que** le sel est un sel de magnésium, de calcium, de zinc, d'étain, de cobalt, de fer(II), de fer(III), d'aluminium et/ou de titane.

12. Liquide de marquage selon l'une des revendications précédentes, **caractérisé en ce que** le contre-ion du cation polyvalent est dérivé d'un acide inorganique ou organique.

13. Liquide de marquage selon l'une des revendications précédentes, **caractérisé en ce que** le contre-ion du cation polyvalent est sélectionné parmi des halogénures, par exemple des chlorures, des nitrates, des sulfates, des alcanes à chaîne linéaire ou ramifiée, ou alicycliques et comportant un à dix, en particulier deux à quatre atomes de carbone, et comportant un, deux ou trois groupes carboxyle, des phosphates, des borates ou des mélanges de ceux-ci, où la quantité totale du sel dans le liquide de marquage est comprise dans une gamme allant de 0,3 % en masse à la saturation de la solution.

14. Liquide de marquage selon l'une des revendications précédentes, **caractérisé en ce que** le cation polyvalent est le magnésium, le calcium, le zinc ou le fer(II).

15. Liquide de marquage selon l'une des revendications précédentes, **caractérisé en ce que** le cation est l'aluminium ou le fer(III).

16. Liquide de marquage selon l'une des revendications précédentes, **caractérisé en ce que** le sel ou le mélange des sels est contenu dans une proportion comprise entre 0,3 et 10 % en masse.

17. Liquide de marquage selon la revendication 16, **caractérisé en ce que** le sel ou le mélange des sels est contenu dans une proportion comprise entre 2 et 8 % en masse, en particulier entre 0,8 et 7 % en masse dans le cas de polyesters, sur la base du ou par rapport au liquide de marquage utilisé.

18. Liquide de marquage selon l'une des revendications précédentes, **caractérisé en ce qu'**il contient, en tant qu'humectant, de la glycérine, de la diglycérine, de la triglycérine, du diglycol, du propylèneglycol, du dipropylèneglycol, des butylèneglycols, des hexylèneglycols, du diéthylèneglycol, du triéthylèneglycol, du sorbitol, du mannitol, du xylitol, du glucose, du fructose et/ou de l'urée.

19. Liquide de marquage selon la revendication 18, **caractérisé en ce que** l'humectant y est contenu dans une proportion comprise entre 3 et 15 % en masse, sur la base du liquide de marquage.

20. Liquide de marquage selon la revendication 2, **caractérisé en ce que** les particules de polyester peuvent être obtenues par une réaction de condensation d'un alcool bivalent ou polyvalent avec un acide dibasique ou polybasique en présence du colorant fluorescent.

21. Liquide de marquage selon la revendication 2, **caractérisé en ce que** les particules de polyester portant l'agent de marquage peuvent être préparées ou fabriquées par polymérisation en émulsion en présence de l'agent de marquage.

22. Liquide de marquage selon l'une des revendications précédentes, **caractérisé en ce que** la quantité totale des sels des cations polyvalents est comprise dans une gamme de 0,3 % en masse à la limite de saturation.

23. Liquide de marquage selon l'une des revendications précédentes, **caractérisé en ce que** la quantité totale des sels des cations polyvalents est comprise dans une gamme de 1 % en masse à 10 % en masse.

24. Utilisation du liquide de marquage selon l'une des revendications 1 à 23 pour fabriquer des marqueurs, des surligneurs et des stylos "néon" ou fluorescents.

25. Utilisation du liquide de marquage selon l'une des revendications 1 à 23 pour marquer des textes imprimés ou écrits avec des encres aqueuses pigmentées.
